# EUROPEAN PATENT APPLICATION

(11) **EP 4 560 755 A1**
(43) Date of publication of application: **28.05.2025**
(21) Application number: 24214800.5
(22) Date of filing: 22.11.2024
(51) Int. Cl.: H01M 10/04, H01M 50/211, H01M 50/242, H01M 50/291, H01M 50/293

(54) **BATTERY MODULE, BATTERY PACK, AND ELECTRIC DEVICE**

(30) Priority: 24.11.2023 CN 202311587431
(71) Applicant: Xiamen Ampack Technology Limited, Xiamen City, Fujian Province, 361000 (CN)
(72) Inventor: LI, Kunlong, Xiamen City, Fujian Province, People's Republic of China, 361000 (CN); NONG, Wenbin, Xiamen City, Fujian Province, People's Republic of China, 361000 (CN); WANG, Pengfei, Xiamen City, Fujian Province, People's Republic of China, 361000 (CN); LI, Mei, Xiamen City, Fujian Province, People's Republic of China, 361000 (CN)
(74) Representative: Icosa

(57) **Abstract**

A battery module (20) includes a housing (21), a cell assembly (22) and an elastic member (23). The housing (21) is provided with a first wall (213) and a second wall (214) arranged opposite to each other along a first direction (X). The cell assembly (22) is accommodated in the housing (21) and supported by the first wall (213). The elastic member (23) and the cell assembly (22) are arranged along a second direction (Y). Along the first direction (X), a clearance (Q1) is provided between the elastic member (23) and the second wall (214), and the elastic member (23) extends beyond the cell assembly (22).

## Description

### TECHNICAL FIELD

This application relates to the field of battery technologies, and in particular, to a battery module, a battery pack, and an electric device.

### BACKGROUND

Batteries are widely used in portable electronic devices, electric vehicles, electric tools, drones, energy storage devices, and other fields. As the application environments and conditions become more complex, higher requirements are imposed on the reliability of batteries.

### SUMMARY

Embodiments of this application provide a battery module, a battery pack, and an electric device, so as to improve the reliability of batteries.

An embodiment of this application provides a battery module. The battery module includes a housing, a cell assembly, and an elastic member. The housing is provided with a first wall and a second wall arranged opposite to each other in a first direction. The cell assembly is accommodated in the housing and supported by the first wall. The elastic member and the cell assembly are arranged along a second direction, where the first direction is perpendicular to the second direction. Along the first direction, a clearance is provided between the elastic member and the second wall, and the elastic member extends beyond the cell assembly.

In this technical solution, the first wall of the housing supports the cell assembly, and the clearance is provided between the elastic member and the second wall along the first direction. In this way, the elastic member can be easily mounted in the housing, reducing the risk of interference between the elastic member and walls of the housing. Along the first direction, the elastic member extends beyond the cell assembly. When the battery module is subject to external forces such as extrusion and impact, the elastic member can withstand the external extrusion and impact before the cell assembly. This alleviates damage to the cell assembly resulting from such external forces, thereby improving the reliability of the battery module.

In one or more of the foregoing optional embodiments, the cell assembly includes a plurality of cell units, the plurality of cell units are stacked along the second direction, and each cell unit includes a cell and a bracket, where the bracket includes a first extension, and the first extension covers a part of the cell. along the first direction, the first extension of the bracket of at least one cell unit is located between the cell of the at least one cell unit and the second wall, and along the first direction, the elastic member extends beyond the first extension.

In this technical solution, the first extension covers a part of the cell, which can protect the cell and reduce the risk of damage to the cell. Along the first direction, the first extension is located between the cell and the second wall, and the elastic member extends beyond the first extension. When the battery module is subject to external forces such as extrusion and impact, the elastic member can withstand the external forces before the first extension. This alleviates damage to the cell resulting from such external forces, thereby improving the reliability of the battery module.

In one or more of the foregoing optional embodiments, the bracket includes a second extension, and the second extension covers a part of the cell, where the second extension of the bracket of at least one cell unit is located between the cell of the at least one cell unit and the first wall.

In this technical solution, the second extension covers a part of the cell, which can protect the cell and reduce the risk of damage to the cell. At least one of the second extensions is located between the cell and the first wall, so that the cell and the first wall can be in indirect contact through the second extension, thereby preventing abrasion caused by direct contact between the cell and the first wall.

In one or more of the foregoing optional embodiments, the cell includes a cell housing, an electrode assembly, and electrode terminals, where the cell housing includes a main body and a first sealing portion, the electrode assembly is provided in the main body, and the electrode terminals protrude out of the cell housing from the first sealing portion; where the first extension covers a part of the first sealing portion, and/or the second extension covers a part of the first sealing portion.

In this technical solution, the first extension covers a part of the first sealing portion, and/or the second extension covers a part of the first sealing portion. This can protect the first sealing portion and improve the sealing performance of the cell, thereby improving the reliability of the cell.

In one or more of the foregoing optional embodiments, the cell housing includes two second sealing portions arranged opposite to each other along the first direction, and along the first direction, the two second sealing portions are located on two sides of the main body respectively; where the first extension covers a part of one of the two second sealing portions and a part of the main body, and/or the second extension covers a part of the other of the two second sealing portions and another part of the main body.

In this technical solution, the cell housing includes two second sealing portions arranged opposite to each other along the first direction. This not only facilitates the assembly and formation of the cell, but also helps improve the sealing performance of the cell. The first extension covers a part of one of the second sealing portions and a part of the main body. This can protect the second sealing portion and the main body and reduce the risk of damage to the cell caused by external forces such as extrusion and impact. The second extension covers a part of the other one of the second sealing portions and a part of the main body. This can protect the second sealing portion and the main body and reduce the risk of damage to the cell caused by external forces such as extrusion and impact.

In one or more of the foregoing optional embodiments, the bracket includes a connecting portion, and the connecting portion connects the first extension and the second extension.

In this technical solution, the connecting portion connects the first extension and the second extension. In this way, the first extension, the second extension, and the connecting portion can be integrally formed, helping fit the cell into the bracket more reliably.

In one or more of the foregoing optional embodiments, the bracket is integrally formed on the cell.

In this technical solution, the bracket is integrally formed on the cell. In this way, the bracket and the cell can be connected easily, the bracket has adequate structural strength, and a stable connection is ensured between the cell and the bracket.

In one or more of the foregoing optional embodiments, the elastic member includes a base portion, a second connecting portion, and at least one buffer portion, where the base portion is connected to the cell assembly, and the buffer portion connects the base portion and the second connecting portion; where along the first direction, the second connecting portion extends beyond the cell assembly, and/or the buffer portion extends beyond the cell assembly.

In this technical solution, along the first direction, the second connecting portion extends beyond the cell assembly, and/or the buffer portion extends beyond the cell assembly. When the battery module is subject to external forces such as extrusion and impact, the second connecting portion and/or the buffer portion can withstand the external extrusion and impact before the cell assembly. This alleviates damage to the cell assembly resulting from such external forces, thereby improving the reliability of the battery module.

In one or more of the foregoing optional embodiments, the buffer portion includes at least one first bending unit provided between the base portion and the second connecting portion, and each first bending unit includes a first section and a second section that are connected, where the first section and the second section are arranged at an included angle.

In this technical solution, the first section and the second section of the buffer portion are connected and arranged at an included angle, so that the buffer portion can deform to absorb the acting force produced by a swelling cell.

In one or more of the foregoing optional embodiments, the elastic member is accommodated in the housing, and the second connecting portion is fixed to the housing.

In this technical solution, the elastic member is accommodated in the housing, making the structure of the battery module more compact. The second connecting portion is fixed to the housing, which can improve the stability of the elastic member in the housing and reduce the risk of jumping.

In one or more of the foregoing optional embodiments, along a third direction, the elastic member includes two extensions extending beyond two ends of the base portion, where the two extensions are fixed to the housing, and the first direction, the second direction, and the third direction are perpendicular to each other.

In this technical solution, the extensions are fixed to the housing. In this way, when a cell swells, the second connecting portion deforms along a direction back away from the cell assembly, so as to adapt to swelling of the cell and provide space for the deformed cell.

In one or more of the foregoing optional embodiments, the housing is provided with a fixing portion, and along the second direction, the elastic member is located between the cell assembly and the fixing portion.

In this technical solution, the fixing portion is provided on a side of the elastic member, the side of the elastic member being a side oriented away from the cell assembly. This can reduce the risk that the elastic member is detached from the cell assembly and the risk that the elastic member and the cell assembly are detached from the housing. In this way, the housing, the cell assembly, and the elastic member can be integrated into a more compact structure.

In one or more of the foregoing optional embodiments, an opening is provided at one end of the housing along the second direction, and the fixing portion is provided at the end of the housing having the opening.

In this technical solution, the fixing portion is provided at the end of the housing having an opening. In this way, the cell assembly and the elastic member can be confined in the housing, and then the housing, the cell assembly, and the elastic member can be integrally formed. The front cover can be removed without affecting the relative positional relationship between the cell assembly and the elastic member, so that the front cover can be removed and mounted separately.

In one or more of the foregoing optional embodiments, the housing includes a third wall and a fourth wall arranged opposite to each other along the third direction, where the first direction, the second direction, and the third direction are perpendicular to each other; and the fixing portion includes a first fixing portion and a second fixing portion spaced apart along the third direction, where the first fixing portion and the second fixing portion are connected to the third wall and the fourth wall respectively, and the second connecting portion abuts against the first fixing portion and the second fixing portion.

In this technical solution, the first fixing portion and the second fixing portion are respectively connected to the third wall and the fourth wall arranged opposite to each other along the third direction. This reduces the risk that the first fixing portion and the second fixing portion interfere with other structures. The first fixing portion and the second fixing portion jointly limit the position of the elastic member, so that the elastic member can more stably abut between the fixing portion and the cell assembly.

In one or more of the foregoing optional embodiments, the fixing portion includes a third fixing portion and a fourth fixing portion spaced apart along the first direction, where the third fixing portion and the fourth fixing portion are connected to the first wall and the second wall respectively, and the second connecting portion abuts against the third fixing portion and the fourth fixing portion.

In this technical solution, the third fixing portion and the fourth fixing portion are connected to the first wall and the second wall respectively, reducing the risk that the third fixing portion and the fourth fixing portion interfere with other structures. The third fixing portion and the fourth fixing portion jointly confine the cell assembly and the elastic member in the housing, reducing the risk that the cell assembly and the elastic member are detached from the housing. In this way, the elastic member can more stably abut between the fixing portion and the cell assembly.

In one or more of the foregoing optional embodiments, the elastic member includes a plurality of buffer portions and a plurality of second connecting portions, where the buffer portions are spaced apart along the first direction, and each second connecting portion is connected to the base portion through one buffer portion.

In this technical solution, the buffer portion and the second connecting portion may be provided in plurality, so as to better absorb the acting force produced by swelling of the cell.

In one or more of the foregoing optional embodiments, the elastic member includes two buffer portions and two second connecting portions, where the two buffer portions are spaced apart along the first direction, the two second connecting portions are spaced apart along the first direction, and the two buffer portions are respectively connected to two ends of the base portion along the first direction.

In this technical solution, two buffer portions and two second connecting portions are provided, and the two buffer portions are spaced apart along the first direction, so as to utilize the assembly space properly.

In one or more of the foregoing optional embodiments, the base portion is provided with a stiffener.

In this technical solution, the base portion is provided with the stiffener, so that the base portion has high strength and is not easy to be damaged.

In one or more of the foregoing optional embodiments, the base portion, the buffer portion, and the second connecting portion are formed by bending one piece of plate.

In this technical solution, the base portion, the buffer portion and the second connecting portion are formed by bending one piece of plate. The structure is simple and easy to manufacture. In addition, the base portion and the buffer portion are firmly connected, and the buffer portion and the second connecting portion are firmly connected.

In one or more of the foregoing optional embodiments, the cell is a pouch cell.

Among one or more of the foregoing optional implementations, an embodiment of this application provides a battery pack, where the battery pack includes a front cover and the battery module according to any one of the foregoing embodiments, and the front cover is connected to the housing.

In this technical solution, the front cover is connected to the housing. This can protect structures in the housing and improve the sealing performance of the battery pack, thereby improving the reliability of the battery pack.

An embodiment of this application further provides an electric device, and the electric device includes at least one battery pack according to any one of the foregoing embodiments.

In this technical solution, the battery module and the battery pack according to any one of the foregoing embodiments have high reliability, which helps improve the reliability of the electric device powered by such battery module and battery pack.

### BRIEF DESCRIPTION OF DRAWINGS

To explain the technical solutions in some embodiments of this application more clearly, the following briefly describes the accompanying drawings required for some embodiments. It should be understood that the accompanying drawings below illustrate only some embodiments of this application.
FIG. 1 is a schematic diagram of a battery pack according to some embodiments of this application;
FIG. 2 is an exploded view of a battery pack according to some embodiments of this application;
FIG. 3 is an exploded view of a housing according to some embodiments of this application;
FIG. 4 is a schematic structural diagram of a second wall according to some embodiments of this application;
FIG. 5 is a partial schematic structural diagram of a battery module according to some embodiments of this application;
FIG. 6 is a schematic structural diagram of a cell according to some embodiments of this application;
FIG. 7 is an exploded view of a cell according to some embodiments of this application;
FIG. 8 is a sectional view of a battery pack according to some embodiments of this application;
FIG. 9 is an enlarged view of position A1 in FIG. 8;
FIG. 10 is a schematic structural diagram of a cell unit according to some embodiments of this application;
FIG. 11 is an enlarged view of position A2 in FIG. 10;
FIG. 12 is a schematic structural diagram of a cell unit according to some embodiments of this application from another angle of view;
FIG. 13 is an enlarged view of position A3 in FIG. 12;
FIG. 14 is a schematic structural diagram of a cell assembly according to some embodiments of this application;
FIG. 15 is a schematic diagram of the cooperation between a a part of the housing and an elastic member;
FIG. 16 is a partial schematic structural diagram of a battery module according to some other embodiments of this application;
FIG. 17 is a schematic structural diagram of an elastic member according to some embodiments of this application;
FIG. 18 is a schematic structural diagram of an elastic member according to some embodiments of this application from another angle of view;
FIG. 19 is a view of an elastic member according to some embodiments of this application observed along a second direction; and
FIG. 20 is a view of an elastic member according to some embodiments of this application observed in an direction opposite to a second direction.

Reference signs: 100: battery pack; 10: front cover; 10a: input terminal; 10b: output terminal; 20: battery module; 21: housing; 211: accommodating space; 212: opening; 213: first wall; 2131: first restraint member; 214: second wall; 2141: second restraint member; 215: third wall; 216: fourth wall; 217: fifth wall; 22: cell assembly; 221: cell unit; 2211: cell; 2211a: first end surface; 2211b: second end surface; 22111: cell housing; 22111a: main body; 22111b: first sealing portion; 22111 c: second sealing portion; 22112: electrode assembly; 22113: electrode terminal; 2212: bracket; 22121: first extension; 22122: second extension; 22123: connecting portion; 222: first conductor; 223: second conductor; 22a: first end; 23: elastic member; 231: base portion; 2311: stiffener; 2312: second end; 232: second connecting portion; 2321: third end; 2322: extension; 233: buffer portion; 233a: first bending unit; 2331: first section; 2332: second section; 24: fixing portion; 241: first fixing portion; 242: second fixing portion; 243: third fixing portion; 244: fourth fixing portion; 25: first insulator; 30: circuit board; X: first direction; Y: second direction; Z: third direction; Q1: clearance; and Q2: buffer.

### DETAILED DESCRIPTION OF EMBODIMENTS

To make the objectives, technical solutions, and advantages of some embodiments of this application clearer, the following clearly and completely describes the technical solutions in some embodiments of this application with reference to the accompanying drawings in some embodiments of this application. Apparently, some described embodiments are some but not all of the embodiments of this application. Generally, the components of some embodiments of this application as described and illustrated in the accompanying drawings herein can be arranged and designed in a variety of configurations.

Therefore, the following detailed description of some embodiments of this application as provided in the accompanying drawings is not intended to limit the scope of this application but merely to represent selected embodiments of this application. It should be noted that, without conflict, some embodiments and features in the embodiments in this application may be combined with each other.

It should be noted that similar reference numerals and letters indicate similar items in the following drawings, and therefore once an item is defined in one drawing, it does not need to be further defined or explained in the subsequent drawings.

In some description of the embodiments of this application, it should be noted that the orientations or positional relationships as indicated are orientations or positional relationships based on the accompanying drawings, or conventional orientations or positional relationships of products of this application, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore cannot be understood as limitations on this application. In addition, the terms "first", "second", "third", and the like are merely intended for distinguishing purposes and shall not be understood as any indication or implication of relative importance.

Currently, from a perspective of market development, application of battery modules is being more extensive. Battery modules are widely used in electric vehicles such as electric bicycles, electric motorcycles, and electric cars, electric tools, drones, energy storage devices, and other fields. With continuous extension of application fields of battery modules, market demands for the battery modules are also expanding.

Along with the development of battery module technologies, many design factors should be considered, for example, performance parameters such as energy density, cycle life, discharge capacity, and charge and discharge rate. In addition, reliability of battery modules is also a major factor as environmental conditions and/or internal conditions of the battery modules change.

As the application environment of battery modules becomes increasingly complex, a battery module may be subject to external forces such as extrusion and impact. If such external forces are transmitted through the housing to cells inside the battery module, the cells may be damaged, reducing the reliability of the battery module.

In view of this, to solve the problem of low reliability of the battery module caused by external forces, an embodiment of this application provides a battery module. The battery module includes a housing, a cell assembly, and an elastic member. The housing is provided with a first wall and a second wall arranged opposite to each other in a first direction. The cell assembly is accommodated in the housing and supported by the first wall. The elastic member is provided in the housing and arranged with the cell assembly along a second direction. Along the first direction, a clearance is provided between the elastic member and the second wall, and the elastic member extends beyond the cell assembly.

The first wall of the housing supports the cell assembly, and the clearance is provided between the elastic member and the second wall along the first direction. In this way, the elastic member can be easily mounted in the housing, reducing the risk of interference between the elastic member and walls of the housing. Along the first direction, the elastic member extends beyond the cell assembly. When the battery module is subject to external forces such as extrusion and impact, the elastic member can withstand the external extrusion and impact before the cell assembly. This alleviates damage to the cell assembly resulting from such external forces, thereby improving the reliability of the battery module.

An embodiment of this application provides an electric device using a battery pack or battery module as the power source. The electric device may be but is not limited to an electronic device, an electric tool, an electric vehicle, a drone, or an energy storage device. The electronic device may include a mobile phone, a tablet, a laptop computer, and the like. The electric tool may include an electric drill, an electric saw, and the like. The electric vehicle may include an electric car, an electric motorcycle, an electric bicycle, and the like.

For ease of description, some electrode terminals shown in the drawings are not in a bent state.

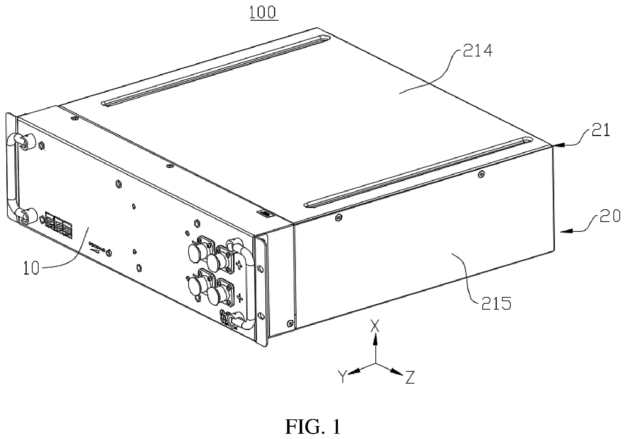

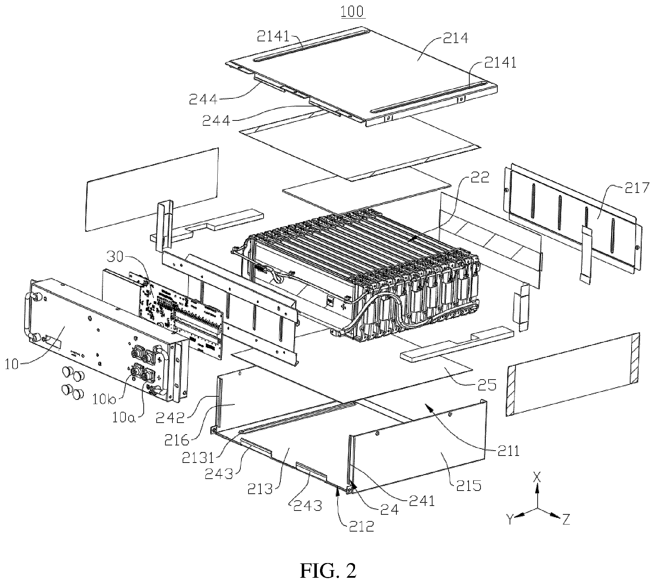

As shown in FIG. 1 and FIG. 2, an embodiment of this application provides a battery pack 100, and the battery pack 100 includes a front cover 10 and a battery module 20.

The battery module 20 includes a housing 21 and a cell assembly 22. The cell assembly 22 is provided in the housing 21. The housing 21 is provided with a first wall 213 and a second wall 214 arranged opposite to each other along a first direction X, and the first wall 213 supports the cell assembly 22.

An accommodating space 211 is formed in the housing 21. The cell assembly 22 is accommodated in the accommodating space 211.

In some embodiments, the housing 21 may be integrally formed. An opening 212 is formed at one end of the accommodating space 211 along a second direction Y, and the front cover 10 covers the opening 212. The front cover 10 covers the opening 212 of the housing 21 of the battery module 20. This can protect structures in the housing 21 and improve the sealing performance of the battery pack 100, thereby improving the reliability of the battery pack 100. The second direction Y is perpendicular to the first direction X.

The front cover 10 is connected to the housing 21 to cover the opening 212. The front cover 10 and the housing 21 may be detachably connected, for example, connected using bolts or buckles. In this way, the front cover 10 can be removed easily, and the housing 21 and the front cover 10 can be maintained separately. The front cover 10 and the housing 21 may be permanently connected, for example, connected through welding or bonding, so as to improve the stability of connection between the front cover 10 and the housing 21 and the performance of sealing between the housing 21 and the front cover 10.

In some other embodiments, the housing 21 may also be formed by connecting several independent parts in a specified direction.

The front cover 10 is provided with an input terminal 10a and an output terminal 10b. The input terminal 10a and the output terminal 10b are electrically connected to an aggregate positive terminal and an aggregate negative terminal of the cell assembly 22 respectively. The input terminal 10a and the output terminal 10b are configured for electrical connection with an external device, so as to charge the battery pack 100 or discharge the electric energy of the battery pack 100.

The battery pack 100 further includes a circuit board 30. Along the second direction Y, the circuit board 30 is provided between the front cover 10 and the cell assembly 22. Optionally, the circuit board 30 may include a BMS (Battery Management System, battery management system) board. The circuit board 30 may be provided with a circuit element, for example, an information collector.

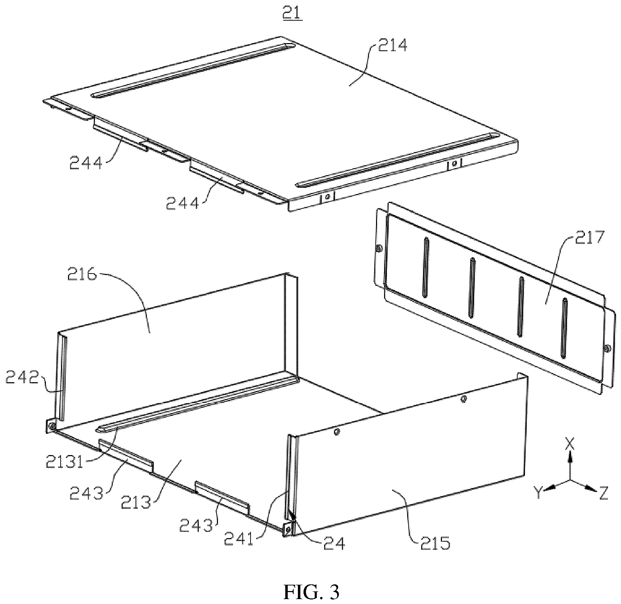

As shown in FIG. 2 and FIG. 3, the housing 21 includes a plurality of walls, and the plurality of walls jointly enclose the accommodating space 211. The plurality of walls may be integrally molded to form the housing 21, and the housing 21 may be integrally formed using a method such as casting, injection molding, and stamping.

Alternatively, a part of the walls may be integrally molded and connected to the other a part of the walls to form a whole, so as to form the housing 21 with the accommodating space 211.

In some other embodiments, the walls of the housing 21 may be separately arranged and connected to form the housing 21. The manner of connection between walls may be but is not limited to welding connection and bonding connection.

As shown in FIG. 2 and FIG. 3, the housing 21 includes a first wall 213, a second wall 214, a third wall 215, a fourth wall 216, and a fifth wall 217. The first wall 213 and the second wall 214 are arranged opposite to each other along the first direction X. The third wall 215 and the fourth wall 216 are arranged opposite to each other along a third direction Z. The opening 212 and the fifth wall 217 are arranged opposite to each other along the second direction Y. The first direction X, the second direction Y, and the third direction Z are perpendicular to each other.

The first wall 213 bears the gravity of the cell assembly 22, so as to support the cell assembly 22. The third wall 215 and the fourth wall 216 are respectively connected to two ends of the first wall 213 along the third direction Z. The first wall 213, the third wall 215, and the fourth wall 216 may be integrally formed.

The second wall 214 is connected to an end of the third wall 215, the end of the third wall 215 being an end oriented away from the first wall 213, the second wall 214 is connected to an end of the fourth wall 216, the end of the fourth wall 216 being an end oriented away from the first wall 213. The second wall 214 and the third wall 215 may be detachably connected, which facilitates the repair and replacement of the second wall 214 and the third wall 215. The detachable connection may be a bolt connection, a buckling connection, or the like.

The second wall 214 and the third wall 215 may be permanently connected, which facilitates the formation of the second wall 214 and the third wall 215. The permanent connection may be a welding connection, a bonding connection, or the like.

The second wall 214 and the fourth wall 216 may be detachably connected, which facilitates the repair and replacement of the second wall 214 and the fourth wall 216. The detachable connection may be a bolt connection, a buckling connection, or the like.

The second wall 214 and the fourth wall 216 may be permanently connected, which facilitates the formation of the second wall 214 and the fourth wall 216. The permanent connection may be a welding connection, a bonding connection, or the like.

The first wall 213, the second wall 214, the third wall 215, and the fourth wall 216 are all connected to the fifth wall 217, and the fifth wall 217 and the opening 212 are arranged opposite to each other along the second direction Y.

The first wall 213, the second wall 214, the third wall 215, the fourth wall 216, and the fifth wall 217 may be permanently connected, for example, connected through welding or bonding.

The first wall 213, the second wall 214, the third wall 215, the fourth wall 216, and the fifth wall 217 may be detachably connected, which facilitates the repair and replacement of various components of the housing 21. The detachable connection may be a bolt connection, a buckling connection, or the like.

In some other embodiments, the first wall 213, the second wall 214, the third wall 215, the fourth wall 216, and the fifth wall 217 may also be integrally formed, which facilitates the formation of the housing 21. In this way, the housing 21 has high structural strength.

As shown in FIG. 2 and FIG. 3, the first wall 213 is provided with two first restraint members 2131, and the two first restraint members 2131 are spaced apart along the third direction Z.

The first restraint member 2131 protrudes from the inner surface of the first wall 213. When the first wall 213 supports the cell assembly 22, the two first restraint members 2131 restrict the movement of the cell assembly 22 along the third direction Z and along a direction opposite to the third direction Z, thereby improving the stability of the cell assembly 22 in the housing 21.

The first restraint member 2131 may be formed by stamping the outer surface of the first wall 213. During stamping, a depression is formed on the outer surface of the first wall 213, and a protruding first restraint member 2131 is formed on the inner surface of the first wall 213.

The inner surface of the first wall 213 refers to a surface of the first wall 213 facing the cell assembly 22 along the first direction X, and the outer surface of the first wall 213 refers to a surface of the first wall 213 back away from the cell assembly 22 in a direction opposite to the first direction X.

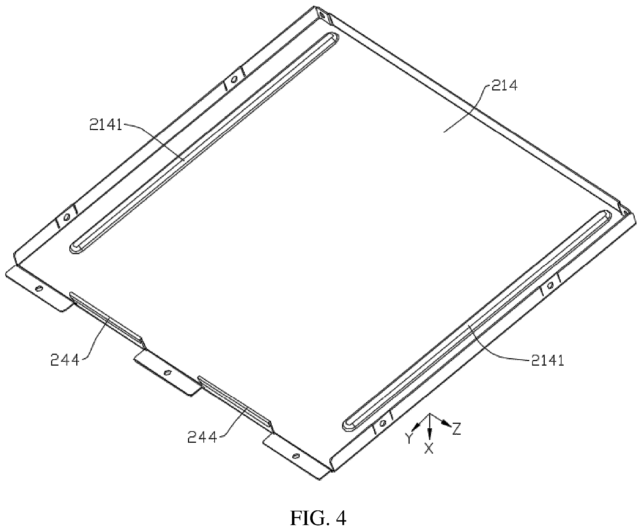

As shown in FIG. 4, the second wall 214 is provided with two second restraint members 2141, and the two second restraint members 2141 are spaced apart along the third direction Z.

The second restraint member 2141 protrudes from the inner surface of the second wall 214. The two second restraint members 2141 can restrict the movement of the cell assembly 22 along the third direction Z and along the direction opposite to the third direction Z, thereby improving the stability of the cell assembly 22 in the housing 21.

The second restraint member 2141 may be formed by stamping the outer surface of the second wall 214. During stamping, a depression is formed on the outer surface of the second wall 214, and a protruding second restraint member 2141 is formed on the inner surface of the second wall 214.

The inner surface of the second wall 214 refers to a surface of the second wall 214 facing the cell assembly 22 along a direction opposite to the first direction X, and the outer surface of the second wall 214 refers to a surface of the second wall 214, the surface of the second wall 214 being a surface oriented away from the cell assembly 22along the first direction X.

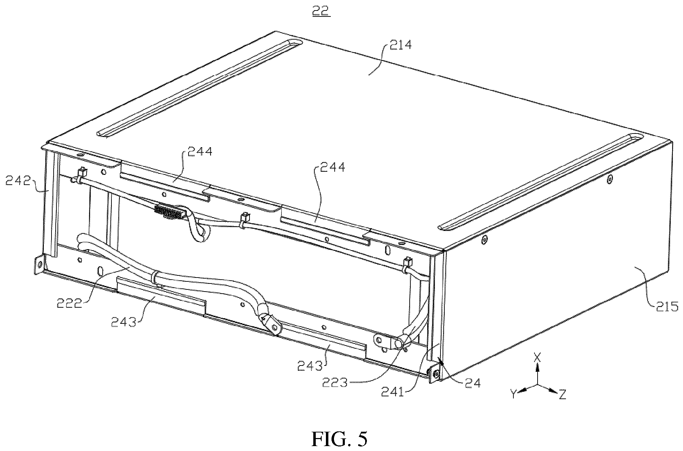

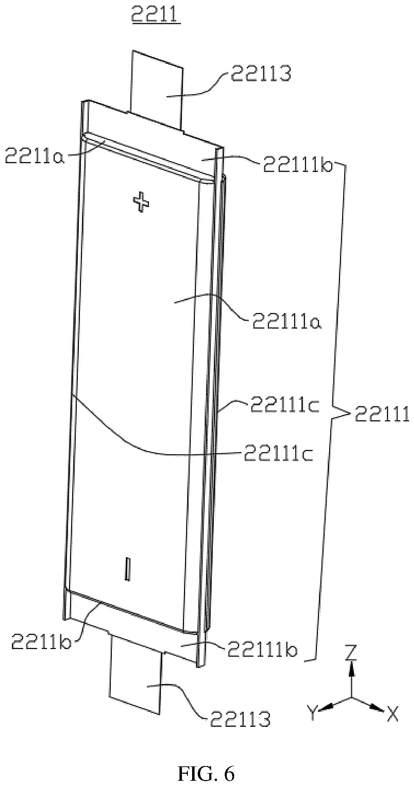

As shown in FIG. 5 and FIG. 6, the cell assembly 22 includes a plurality of cell units 221, and the plurality of cell units 221 are stacked along the second direction Y. "A plurality of" means two or more. Each cell unit 221 includes a cell 2211. The cell 2211 may be a cell with a hard casing or a pouch cell.

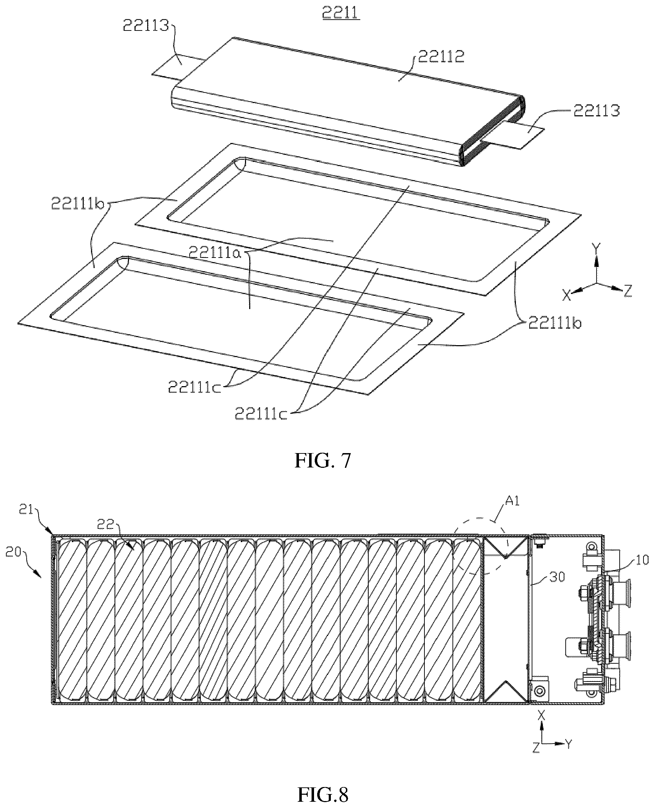

In FIG. 6 and FIG. 7, the cell 2211 is a pouch cell. As shown in FIG. 6 and FIG. 7, the cell 2211 includes a cell housing 22111, an electrode assembly 22112, and electrode terminals 22113. The electrode assembly 22112 is accommodated in the cell housing 22111. The cell housing 22111 may be made of aluminum-plastic film, steel-plastic film, or the like.

In some embodiments, the cell housing 22111 includes a main body 22111a and a first sealing portion 22111b. The first sealing portion 22111b is connected to a first end surface 2211a of the main body 22111a along the third direction Z. The electrode assembly 22112 is accommodated in the main body 22111a. The electrode terminals 22113 are connected to the electrode assembly 22112 and extend out of the cell housing 22111 from the first sealing portion 22111b.

The cell 2211 includes two electrode terminals 22113. The two electrode terminals 22113 are both connected to the electrode assembly 22112 but have opposite polarities. That is, one electrode terminal 22113 is a positive electrode terminal and the other electrode terminal 22113 is a negative electrode terminal.

In some embodiments, the two electrode terminals 22113 may be located one end of the cell 2211 along the third direction Z, and the two electrode terminals 22113 extend out of the cell housing 22111 from the same first sealing portion 22111b. In this way, the cell assembly 22 can be properly disposed in the housing 21, so that the internal space of the housing 21 is fully utilized and other structures can be electrically connected to the two electrode terminals 22113 conveniently. In this case, the cell housing 22111 may include one first sealing portion 22111b.

As shown in FIG. 5 to FIG. 7, in some other embodiments, the two electrode terminals 22113 may be located at opposite ends of the cell 2211 respectively. The cell housing 22111 includes two first sealing portions 22111b. Along the third direction Z, the two first sealing portions 22111b are located on two sides of the main body 22111a respectively. One first sealing portion 22111b is connected to the first end surface 2211a of the main body 22111a, and the other first sealing portion 22111b is connected to a second end surface 2211b of the main body 22111a, where the first end surface 2211a and the second end surface 2211b are arranged opposite to each other along the third direction Z. The two electrode terminals 22113 are located at opposite ends of the cell 2211 respectively, so as to reduce the risk of short circuit of the cell assembly 22.

In some embodiments, the cell housing 22111 includes two second sealing portions 22111c arranged opposite to each other along the first direction X. Along the first direction X, the two second sealing portions 22111c are located on two sides of the main body 22111a respectively. This not only facilitates the assembly and formation of the cell 2211, but also helps improve the sealing performance of the cell 2211.

The plurality of cells 2211 may be connected in series or in parallel. Alternatively, some cells 2211 in the plurality of cells 2211 are connected in series and the rest of cells 2211 are connected in parallel.

As shown in FIG. 5, the cell assembly 22 further includes a first conductor 222 and a second conductor 223. The first conductor 222 is electrically connected to one electrode terminal 22113 of the cell 2211 to form an aggregate positive terminal of the cell assembly 22, and the second conductor 223 is electrically connected to the other electrode terminal 22113 of the cell 2211 to form an aggregate negative terminal of the cell assembly 22. The aggregate positive terminal and the aggregate negative terminal are electrically connected to the input terminal 10a and the output terminal 10b respectively.

In some embodiments, as shown in FIG. 2, FIG. 8, and FIG. 9, the battery module 20 further includes an elastic member 23. The elastic member 23 and the cell assembly 22 are arranged along the second direction Y. Along the first direction X, a clearance Q1 is provided between the elastic member 23 and the second wall 214, and the elastic member 23 extends beyond the cell assembly 22.

The first wall 213 of the housing 21 supports the cell assembly 22, and the clearance Q1 is provided between the elastic member 23 and the second wall 214 along the first direction X. In this way, the elastic member 23 can be easily mounted in the housing 21, reducing the risk of interference between the elastic member 23 and walls of the housing 21. Along the first direction X, the elastic member 23 extends beyond the cell assembly 22. When the battery module 20 is subject to external forces such as extrusion and impact, the elastic member 23 can withstand the external extrusion and impact before the cell assembly 22. This alleviates damage to the cell assembly 22 resulting from such external forces, thereby improving the reliability of the battery module 20.

In some embodiments, the elastic member 23 is configured to provide space for accommodating a swelling cell assembly 22. The elastic member 23 can be compressed or expanded along the second direction Y. When the cell 2211 swells, the cell assembly 22 presses the elastic member 23, and the elastic member 23 is compressed along the second direction Y to absorb the swelling of the cell 2211 and provide space for the swelling cell 2211. The elastic member 23 can also keep the cell units 221 abutting against each other. This makes the structure of the cell assembly 22 more compact and reduces the risk that the cell units 221 moves in the housing 21.

Along the first direction X, the cell assembly 22 has a first end 22a closest to the second wall 214, and the elastic member 23 extends beyond the first end 22a. That is, the elastic member 23 extends beyond the end of the cell assembly 22 closest to the second wall 214. In this way, when the battery module 20 is subject to an external force in the first direction X, the elastic member 23 can always withstand the external force before the cell assembly 22. This alleviates damage to the cell assembly 22, thereby improving the reliability of the battery module 20.

A material of the elastic member 23 includes but is not limited to metal and plastic.

In an embodiment where the battery pack 100 includes a circuit board 30, the elastic member 23 is provided between the cell assembly 22 and the circuit board 30 along the second direction Y.

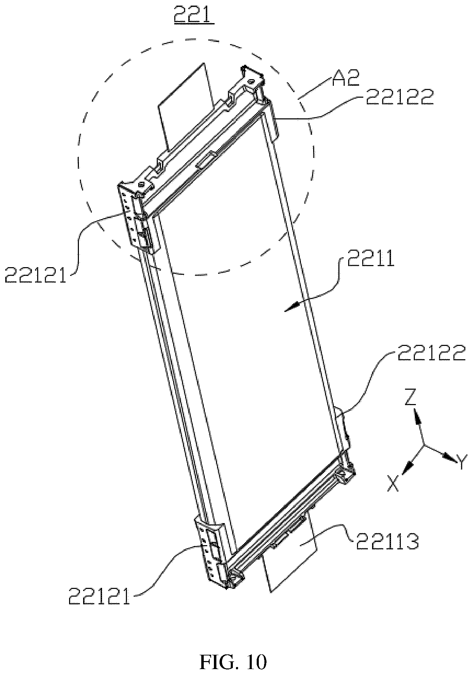

As shown in FIG. 10 to FIG. 13, in some embodiments, the cell unit 221 includes a bracket 2212. The bracket 2212 is provided on the cell 2211.

In some embodiments, the brackets 2212 of two adjacent cell units 221 may abut against each other along the second direction Y. The brackets 2212 of two adjacent cell units 221 abut against each other. This can alleviate the damage to the adjacent cells 2211 caused by friction, thereby improving the reliability of the cell 2211 and increasing the service life of the cell 2211.

In some other embodiments, the main bodies 22111a of the cell housings 22111 of two adjacent cell units 221 may be in contact.

Along the first direction X, the bracket 2212 is closer to the second wall 214 than the cell 2211, and an end of the bracket 2212 facing the second wall 214 is the first end 22a. The elastic member 23 extends beyond the end of the bracket 2212 facing the second wall 214. When the battery module 20 is subject to external forces such as extrusion and impact, the elastic member 23 can withstand the external forces before the bracket 2212. This alleviates damage to the cell 2211 resulting from such external forces, thereby improving the reliability of the battery module 20.

In some embodiments, the bracket 2212 includes a first extension 22121, and the first extension 22121 covers a part of the cell 2211.

In some embodiments, along the first direction X, at least one first extension 22121 is located between the cell 2211 and the second wall 214. Along the first direction X, the elastic member 23 extends beyond the first extension 22121.

Along the first direction X, an end of the first extension 22121 facing the second wall 214 is the first end 22a of the cell assembly 22. When the battery module 20 is subject to external forces such as extrusion and impact, the elastic member 23 can withstand the external extrusion and impact before the bracket 2212. This alleviates damage to the cell 2211 resulting from such external forces, thereby improving the reliability of the battery module 20.

The first extension 22121 covers a part of the cell housing 22111, so as to protect the cell 2211 and reduce the risk of damage to the cell 2211 when the battery module 20 is subject to external forces such as extrusion and impact.

In some embodiments, the first extension 22121 covers a part of the first sealing portion 22111b. This can protect the first sealing portion 22111b and reduce the risk of damage to the cell 2211 caused by external forces such as extrusion and impact.

In some embodiments, the first extension 22121 covers a part of one of the second sealing portions 22111c and a part of the main body 22111a. This can protect the second sealing portion 22111c and the main body 22111a and reduce the risk of damage to the battery 2211 caused by external forces such as extrusion and impact.

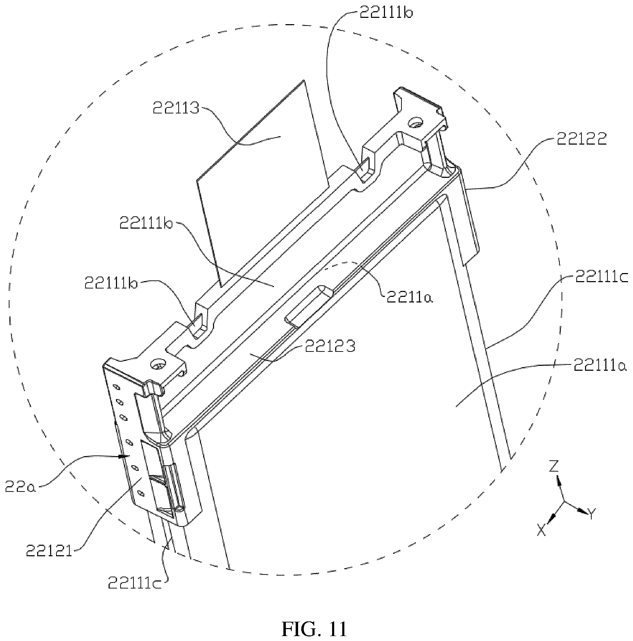

There may be one or more first extensions 22121. As shown in FIG. 10 and FIG. 11, two first extensions 22121 are provided, the two first extensions 22121 are spaced apart along the third direction Z, and each first extension 22121 covers a part of the first sealing portion 22111b, a part of the main body 22111a, and a part of the second sealing portion 22111c. This can better protect the cell 2211 while reducing the weight of the cell unit 221.

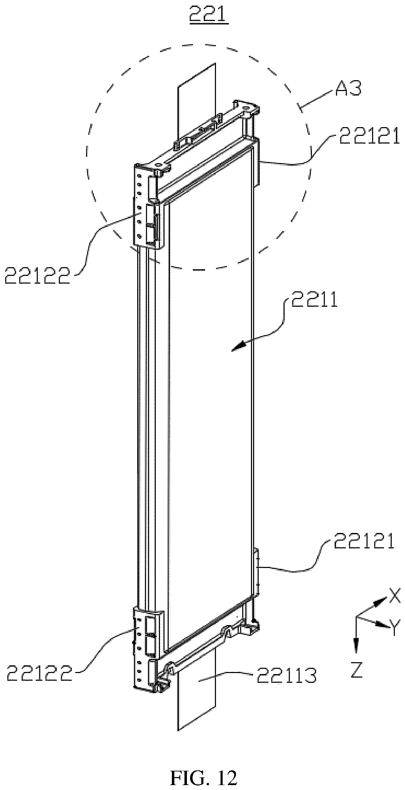

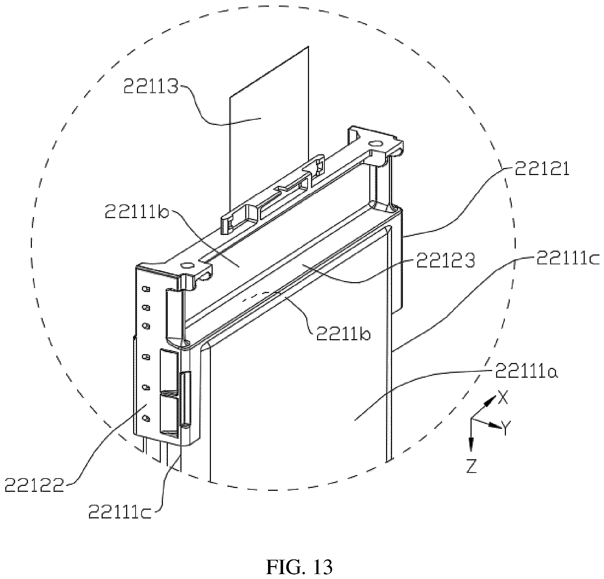

In some embodiments, as shown in FIG. 12 and FIG. 13, the bracket 2212 includes a second extension 22122. The second extension 22122 covers a part of the cell 2211.

In some embodiments, at least one second extension 22122 is located between the cell 2211 and the first wall 213 along the first direction X to protect the cell 2211.

The second extension 22122 covers a part of the cell housing 22111, so as to protect the cell 2211 and reduce the risk of damage to the cell 2211 when the battery module 20 is subject to external forces such as extrusion and impact.

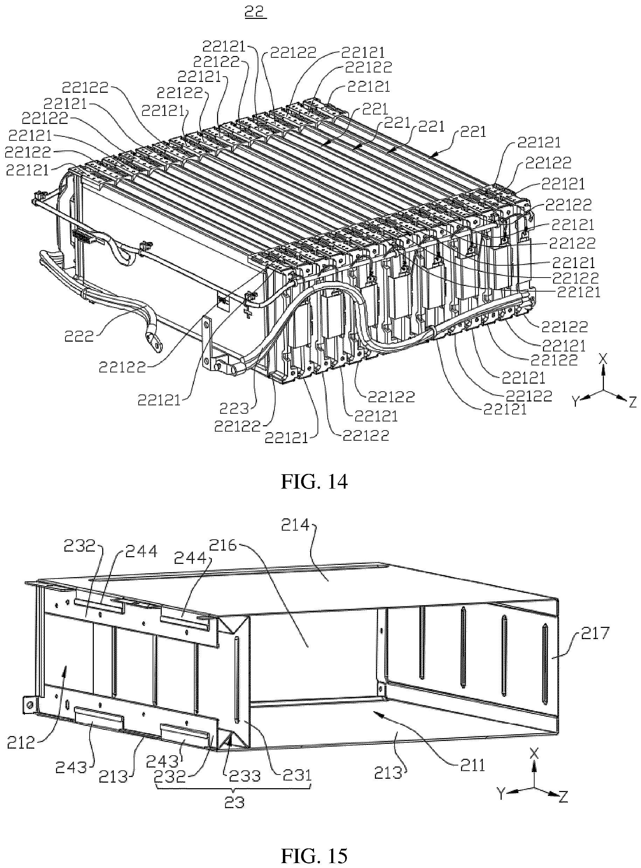

In some embodiments, the cells 2211 are connected in series, and along the second direction Y, the first extension 22121 and the second extension 22122 are sequentially spaced apart (as shown in FIG. 14).

In some embodiments, the second extension 22122 covers a part of the first sealing portion 22111b. This can protect the first sealing portion 22111b and reduce the risk of damage to the cell 2211 caused by external forces such as extrusion and impact.

In some embodiments, the first extension 22121 covers a part of the first sealing portion 22111b, and the second extension 22122 covers a part of the first sealing portion 22111b.

In some embodiments, the second extension 22122 covers a part of another second sealing portions 22111c and a part of the main body 22111a. This can protect the second sealing portion 22111c and the main body 22111a and reduce the risk of damage to the cell 2211 caused by external forces such as extrusion and impact.

There may be one or more second extensions 22122. As shown in FIG. 10 to FIG. 13, two second extensions 22122 are provided, the two second extensions 22122 are spaced apart along the third direction Z, and each second extension 22122 covers a part of the first sealing portion 22111b, another part of the main body 22111a, and a part of the second sealing portion 22111c. This can better protect the cell 2211 while reducing the weight of the cell unit 221.

In some embodiments, the bracket 2212 includes a connecting portion 22123, and the connecting portion 22123 connects the first extension 22121 and the second extension 22122. In this way, the first extension 22121, the second extension 22122, and the connecting portion 22123 are integrally formed, helping fit the cell 2211 into the bracket 2212 more reliably.

In an embodiment where two first extensions 22121 and two second extensions 22122 are provided, there may be two connecting portions 22123, and each connecting portion 22123 connects one first extension 22121 and one second extension 22122.

The connecting portion 22123 may cover a part of the first sealing portion 22111b and a part of the main body 22111a. This can better protect the cell 2211 and improve the sealing performance of the cell 2211.

In some embodiments, the connecting portion 22123 covers at least a part of the first end surface 2211a. This can mitigate the deformation of the main body 22111a, reduce the risk of bulging on the first end surface 2211a, and improve the reliability of the battery module 20.

In some embodiments, the connecting portion 22123 covers a part of the first sealing portion 22111b, helping strengthen the protection of the first sealing portion 22111b.

The bracket 2212 can be disposed on the cell 2211 in different ways, for example, the bracket 2212 is bonded to the cell 2211, and the bracket 2212 is welded to the cell 2211.

In some embodiments, the bracket 2212 is integrally formed on the cell 2211. In this way, the bracket 2212 and the cell 2211 can be connected easily, the bracket 2212 has adequate structural strength, and a stable connection is ensured between the cell 2211 and the bracket 2212. Integrated forming means that the bracket 2212 is directly fixed to the cell 2211. The integrated forming method includes but is not limited to casting and injection molding.

In some embodiments, after an insulating material is poured around the cell 2211 by using the casting process, the insulating material solidifies to form the bracket 2212, and the bracket 2212 and the cell 2211 are bonded. For example, the cell 2211 is placed into a mold, the insulating material is poured into the mold, the insulating material solidifies to form the bracket 2212 and is bonded with the cell 2211, and then the bracket 2212 and the cell 2211 are taken out of the mold.

In some embodiments, the insulating material includes but is not limited to a potting compound and polystyrene foam.

In some embodiments, the injection molding process refers to that: the cell 2211 is placed into a mold, the injection molding device heats and melts the insulating material, the melted insulating material flows into the mold, the insulating material solidifies to form the bracket 2212, and then the bracket 2212 and the cell 2211 are taken out of the mold. Optionally, the insulating material includes polyamide.

In some embodiments, the bracket 2212 is an insulating bracket, which can reduce the risk of short circuit between the bracket 2212 and the cell 2211.

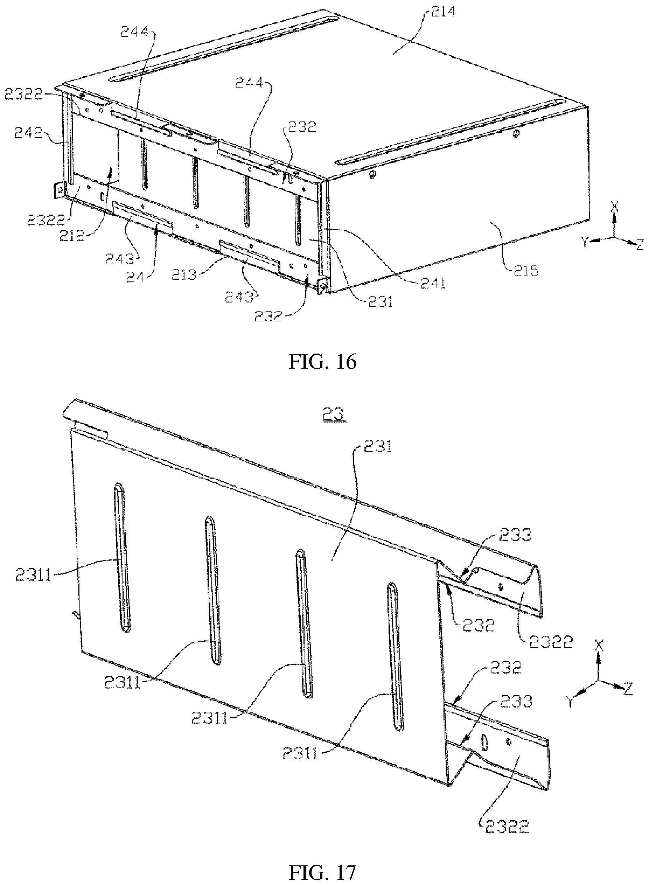

In some embodiments, as shown in FIG. 15 and FIG. 16, the housing 21 is provided with a fixing portion 24, and along the second direction Y, the elastic member 23 is located between the cell assembly 22 and the fixing portion 24. The fixing portion 24 is provided on a side of the elastic member 23, the side of the elastic member 23 being a side oriented away from the cell assembly 22. This can reduce the risk that the elastic member 23 is detached from the cell assembly 22 and the risk that the elastic member 23 and the cell assembly 22 are detached from the housing 21. In this way, the housing 21, the cell assembly 22, and the elastic member 23 can be integrated into a more compact structure.

Along the second direction Y, one end of the elastic member 23 abuts against the cell assembly 22. The elastic member 23 and the cell assembly 22 may directly abut against each other. That is, the elastic member 23 and the cell assembly 22 are in direct contact. The elastic member 23 and the cell assembly 22 may also abut against each other indirectly. For example, a buffer Q2 is provided between the elastic member 23 and the cell assembly 22, so that the elastic member 23 and the cell assembly 22 indirectly abut against each other through the buffer Q2. The buffer Q2 may be foam.

In the second direction Y, another end of the elastic member 23 abuts against the fixing portion 24. The elastic member 23 and the fixing portion 24 may directly abut against each other. That is, the elastic member 23 and the fixing portion 24 are in direct contact. The elastic member 23 and the fixing portion 24 may also abut against each other indirectly, for example, a buffer Q2 is provided between the elastic member 23 and the fixing portion 24, so that the elastic member 23 and the fixing portion 24 indirectly abut against each other through the buffer Q2. The buffer Q2 may be foam.

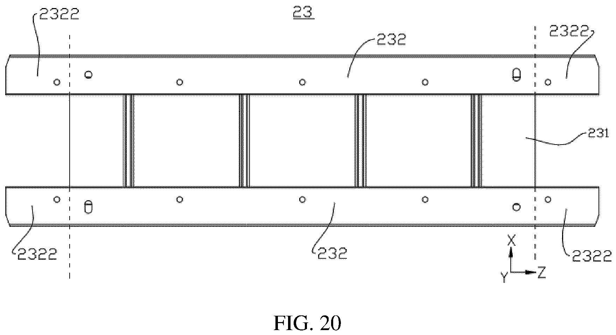

As shown in FIG. 17 to FIG. 20, in some embodiments, the elastic member 23 includes a base portion 231, a second connecting portion 232, and at least one buffer portion 233. The base portion 231 is connected to the cell assembly 22, and the buffer portion 233 connects the base portion 231 and the second connecting portion 232.

In some embodiments, along the first direction X, the second connecting portion 232 extends beyond the cell assembly 22 and/or the buffer portion 233 extends beyond the cell assembly 22.

The base portion 231 is connected to the cell assembly 22. In some embodiments, the base portion 231 is connected to the cell unit 221 of the cell assembly 22 closest to the elastic member 23. Optionally, the base portion 231 is in contact-type connection with the cell unit 221. Optionally, the base portion 231 and the cell unit 221 may be connected through another component. The base portion 231 is configured to apply pressure on the cell unit 221.

In some embodiments, along the first direction X, a projection of the main body 22111a located within the base portion 231, helping the base portion 231 apply pressure on the main body 22111a.

The second connecting portion 232 may be connected to the fixing portion 24. Optionally, the second connecting portion 232 is in contact-type connection with the fixing portion 24. Optionally, the second connecting portion 232 and the fixing portion 24 may be connected through another component.

When the cell 2211 swells, the distance between the base portion 231 and the second connecting portion 232 along the second direction Y changes. The buffer portion 233 can adapt to the change of the distance between the base portion 231 and the second connecting portion 232, thereby adapting to swelling of the cell 2211.

The base portion 231 abuts against the cell assembly 22, and the second connecting portion 232 abuts against the fixing portion 24. In this way, the cell assembly 22 and the fixing portion 24 can interact with the elastic member 23 conveniently, and the buffer portion 233 can adapt to the change of the distance between the base portion 231 and the second connecting portion 232 and provide space for the swelling cell 2211.

The buffer portion 233 may be in various structures. For example, the buffer portion 233 is a semicircular arc structure, an S-shaped structure, a Z-shaped structure, or the like. As shown in FIG. 17 to FIG. 20, in some embodiments, the buffer portion 233 is a bending structure provided between the base portion 231 and the second connecting portion 232. Such structure is simple and easy to manufacture, and can properly adapt to the change of the distance between the base portion 231 and the second connecting portion 232.

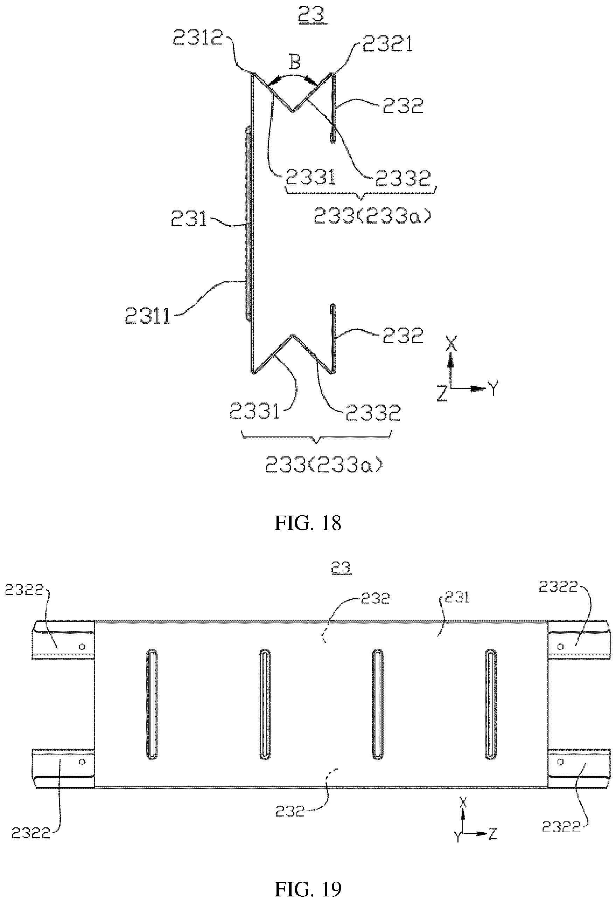

As shown in FIG. 17 and FIG. 18, in some embodiments, the buffer portion 233 includes at least one first bending unit 233a provided between the base portion 231 and the second connecting portion 232, and the first bending unit 233a includes a first section 2331 and a second section 2332 that are connected, where the first section 2331 and the second section 2332 are arranged at an included angle.

The first section 2331 and the second section 2332 of the buffer portion 233 are connected and arranged at an included angle, so that the buffer portion 233 can deform to absorb the acting force produced by a swelling cell 2211.

The included angle between the first section 2331 and the second section 2332 is B, where 0° < B < 90°. That is, the first section 2331 and the second section 2332 may be arranged at an acute angle.

The buffer portion 233 may include one or more first bending units 233a. In an embodiment where the buffer portion 233 includes a plurality of first bending units 233a, the plurality of first bending units 233a are sequentially connected along the second direction Y. This helps increase the adjustment range of the distance between the base portion 231 and the second connecting portion 232, so as to better adapt to swelling of the cell 2211.

The plurality of first bending units 233a are connected to the base portion 231 and the second connecting portion 232 respectively.

As shown in FIG. 18, the buffer portion 233 includes one first bending unit 233a. An end of the first section 2331 of the first bending unit 233a is connected to the base portion 231, the end of the first section 2331 being an end oriented away from the second section 2332, and an end of the second section 2332 is connected to the second connecting portion 232, the end of the second section 2332 being an end oriented away from the first section 2331. The first section 2331 and the base portion 231 are arranged at an acute angle, and the second section 2332 and the second connecting section 232 are arranged at an acute angle. The buffer portion 233 having one first bending unit 233a, the base portion 231, and the second connecting portion 232 form an M-shaped elastic member 23.

When the cell 2211 swells, the distance between the base portion 231 and the second connecting portion 232 along the second direction Y decreases, the angle between the first section 2331 and the second section 2332 decreases, the angle between the base portion 231 and the first section 2331 decreases, and the angle between the second connecting portion 232 and the second section 2332 decreases.

The elastic member 23 may include one or more buffer portions 233. In an embodiment where the elastic member 23 includes a plurality of buffer portions 233, at least one buffer portion 233 extends beyond the cell assembly 22 along the first direction X.

As shown in FIG. 17 to FIG. 20, the plurality of buffer portions 233 are spaced apart along the first direction X. Each buffer portion 233 connects the base portion 231 and the second connecting portion 232. The plurality of buffer portions 233 are connected between the base portion 231 and the second connecting portion 232, which can adapt to the change of the distance between the base portion 231 and the second connecting portion 232.

As shown in FIG. 17 to FIG. 20, in an embodiment where the elastic member 23 includes a plurality of buffer portions 233, the elastic member 23 further includes a plurality of second connecting portions 232, where each buffer portion 233 corresponds to one second connecting portion 232, and each second connecting portion 232 is connected to the base portion 231 through one buffer portion 233. The buffer portion 233 and the second connecting portion 232 may be provided in plurality, so as to absorb the acting force produced by a swelling cell 2211.

For example, as shown in FIG. 17 to FIG. 20, the elastic member 23 includes two buffer portions 233 and two second connecting portions 232, where the two buffer portions 233 are spaced apart along the first direction X, the two second connecting portions 232 are spaced apart along the first direction X, and the two buffer portions 233 are respectively connected to two ends of the base portion 231 along the first direction X. Two buffer portions 233 and two second connecting portions 232 are provided, and the two buffer portions 233 are spaced apart along the first direction X, so as to utilize the assembly space properly.

As shown in FIG. 17 to FIG. 20, in some embodiments, the base portion 231 is provided with a stiffener 2311, so that the base portion 231 has high strength and is not easy to be damaged.

The stiffener 2311 may be in a strip structure extending along the first direction X. There may be one or more stiffeners 2311. In an embodiment where a plurality of stiffeners 2311 are provided, the plurality of stiffeners 2311 are spaced apart along the third direction Z. A shown in FIG. 17, FIG. 19, and FIG. 20, four stiffeners 2311 are provided.

The elastic member 23 may be formed in different manners. For example, the base portion 231, the second connecting portion 232, and the buffer portion 233 are independent of each other, and they are connected into a whole by means of detachable connection or permanent connection to form the elastic member 23. In some other embodiments, the elastic member 23 may also be integrally formed. For example, the base portion 231, the buffer portion 233, and the second connecting portion 232 are formed by bending one piece of plate. The structure is simple and easy to manufacture. In addition, the base portion 231 and the buffer portion 233 are firmly connected, and the buffer portion 233 and the second connecting portion 232 are firmly connected.

In some embodiments, the elastic member 23 is accommodated in the housing 21, and the second connecting portion 232 is fixed to the housing 21.

In some embodiments, fixing includes but is not limited to abutting, bonding, welding, locking through fasteners, and buckling connection.

In some embodiments, the elastic member 23 is fixed by the housing 21. When the front cover 10 is removed, the elastic member 23 is fixed by the housing 21. This facilitates the repair and replacement of the battery pack 100.

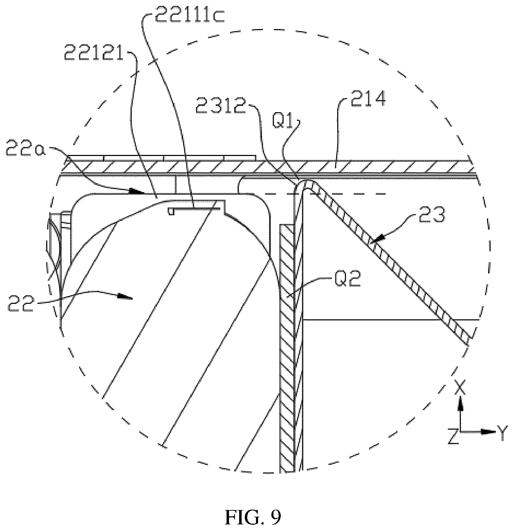

In some embodiments, the base portion 231 has a second end 2312 facing the second wall 214, and the second connecting portion 232 has a third end 2321 facing the second wall 214. One of the at least one buffering portion 233 connects the second end 2312 and the third end 2321, where the second end 2312 and/or the third end 2321 is an end of the elastic member 23 closest to the second wall 214 (see FIG. 9).

The third end 2321 and the second end 2312 may be located at the same height along the second direction Y, and then the distance between the third end 2321 and the second wall 214 is the same as the distance between the second end 2312 and the second wall 214. In this case, when the battery module 20 is subject to an external force, the third end 2321 and the second end 2312 can jointly resist the external force, so that the elastic member 23 can absorb greater external extrusion and impact. This reduces the risk of collapse of the elastic member 23 under external forces, thereby alleviating damage to the cell assembly 22.

In some embodiments, the third end 2321 and the second wall 214 may also be located at different heights. Specifically, the third end 2321 is closer to the second wall 214 than the second end 2312 or the second end 2312 is closer to the second wall 214 than the third end 2321.

In some embodiments, the fixing portion 24 is provided at the end of the housing 21 with an opening 212. In this way, the cell assembly 22 and the elastic member 23 can be confined in the housing 21, and then the housing 21, the cell assembly 22, and the elastic member 23 can be integrally formed. The front cover 10 can be removed without affecting the relative positional relationship between the cell assembly 22 and the elastic member 23, so that the front cover 10 can be removed and mounted separately.

As shown in FIG. 2, FIG. 3, FIG. 15, and FIG. 16, the fixing portion 24 includes a first fixing portion 241 and a second fixing portion 242 spaced apart along the third direction Z. The first fixing portion 241 and the second fixing portion 242 are connected to the third wall 215 and the fourth wall 216 respectively, and the second connecting portion 232 abuts against the first fixing portion 241 and the second fixing portion 242.

The first fixing portion 241 and the second fixing portion 242 are respectively connected to the third wall 215 and the fourth wall 216 arranged opposite to each other along the third direction Z. This reduces the risk that the first fixing portion 241 and the second fixing portion 242 interfere with other structures. The first fixing portion 241 and the second fixing portion 242 jointly limit the position of the elastic member 23, so that the elastic member 23 can more stably abut between the fixing portion 24 and the cell assembly 22.

In some embodiments, the fixing portion 24 includes a first fixing portion 241, and the first fixing portion 241 is connected to an end of the third wall 215 located at the opening 212 of the housing 21. The first fixing portion 241 and the third wall 215 may be separately arranged and then connected into a whole. The first fixing portion 241 and the third wall 215 may be permanently connected, for example, connected through welding or bonding, so as to improve the stability of connection between the first fixing portion 241 and the third wall 215. The first fixing portion 241 and the third wall 215 may be detachably connected, for example, connected using bolts, which facilitates the repair and replacement of the first fixing portion 241. If either of the third wall 215 and the first fixing portion 241 is damaged, only the damaged one needs to be replaced, thereby reducing costs.

In some other embodiments, the first fixing portion 241 and the third wall 215 may also be integrally formed. The first fixing portion 241 may be a flange structure provided at an end portion of the third wall 215, so that the first fixing portion 241 can be formed easily.

In some embodiments, the fixing portion 24 includes a second fixing portion 242, and the second fixing portion 242 is connected to an end of the fourth wall 216 located at the opening 212 of the housing 21. The second fixing portion 242 and the fourth wall 216 may be separately arranged and then connected into a whole. The second fixing portion 242 and the fourth wall 216 may be permanently connected, for example, connected through welding or bonding, so as to improve the stability of connection between the second fixing portion 242 and the fourth wall 216. The second fixing portion 242 and the fourth wall 216 may be detachably connected, for example, connected using bolts, which facilitates the repair and replacement of the second fixing portion 242. If either of the fourth wall 216 and the second fixing portion 242 is damaged, only the damaged one needs to be replaced, thereby reducing costs.

In some other embodiments, the second fixing portion 242 and the fourth wall 216 may be integrally formed. The second fixing portion 242 may be a flange structure provided at an end portion of the fourth wall 216, so that the second fixing portion 242 can be formed easily.

In some embodiments, in the third direction Z, the elastic member 23 includes an extension 2322 extending beyond the base portion 231. The extension 2322 is connected to the second connecting portion 232 and fixed to the housing 21. Optionally, along a direction opposite to the third direction Z, the extension 2322 extends beyond the base portion 231. Optionally, along the third direction Z, the extension 2322 extends beyond the base portion 231.

In some embodiments, the elastic member 23 includes two extensions 2322. Along the third direction Z, the two extensions 2322 are connected to two sides of the second connecting portion 232 respectively. One extension 2322 is fixed to the first fixing portion 241. Optionally, the extension 2322 abuts against the first fixing portion 241. The other extension 2322 is fixed to the second fixing portion 242. Optionally, the extension 2322 abuts against the second fixing portion 242.

In some embodiments, one of the two extensions 2322 extends beyond one end of the base portion 231 along the third direction Z, and the other one of the two extensions 2322 extends beyond another end of the base portion 231 along a direction opposite to the third direction Z.

When the cell 2211 swells, the two extensions 2322 abut against the first fixing portion 241 and the second fixing portion 242 respectively to function like a cantilever structure. This can not only prevent the elastic member 23 from being detached from the first fixing portion 241 and the second fixing portion 242, but also adapt to swelling of the cell 2211.

The extensions 2322 are fixed to the first fixing portion 241 and the second fixing portion 242 respectively. In this way, when the cell 2211 swells, the second connecting portion 232 deforms along a direction back away from the cell assembly 22, so as to adapt to swelling of the cell 2211 and provide space for the deformed cell 2211.

In some embodiments, the fixing portion 24 includes a third fixing portion 243 and a fourth fixing portion 244 spaced apart along the first direction X, where the third fixing portion 243 and the fourth fixing portion 244 are connected to the first wall 213 and the second wall 214 respectively, and the second connecting portion 232 abuts against the third fixing portion 243 and the fourth fixing portion 244.

The third fixing portion 243 is connected to the first wall 213 and the second wall 214, the fourth fixing portion 244 is connected to the first wall 213 and the second wall 214, reducing the risk that the third fixing portion 243 and the fourth fixing portion 244 interfere with other structures. The third fixing portion 243 and the fourth fixing portion 244 jointly confine the cell assembly 22 and the elastic member 23 in the housing 21, reducing the risk that the cell assembly 22 and the elastic member 23 are detached from the housing 21. In this way, the elastic member 23 can more stably abut between the fixing portion 24 and the cell assembly 22.

In some embodiments, the fixing portion 24 includes a third fixing portion 243, and the third fixing portion 243 is connected to an end of the first wall 213 located at the opening 212 of the housing 21. The third fixing portion 243 protrudes from the inner surface of the first wall 213 along a direction from the first wall 213 to the second wall 214. The third fixing portion 243 and the first wall 213 may be separately arranged and then connected into a whole. The third fixing portion 243 and the first wall 213 may be permanently connected, for example, connected through welding or bonding, so as to improve the stability of connection between the third fixing portion 243 and the first wall 213. The third fixing portion 243 and the first wall 213 may be detachably connected, for example, connected using bolts, which facilitates the repair and replacement of the third fixing portion 243. If either of the first wall 213 and the third fixing portion 243 is damaged, only the damaged one needs to be replaced, thereby reducing costs.

In some other embodiments, the third fixing portion 243 and the first wall 213 may also be integrally formed. The third fixing portion 243 may be a flange structure provided at an end portion of the first wall 213, so that the third fixing portion 243 can be formed easily.

There may be one or more third fixing portions 243. In an embodiment where a plurality of third fixing portions 243 are provided, the plurality of third fixing portions 243 are spaced apart along the third direction Z. As shown in FIG. 2, FIG. 3, FIG. 15, and FIG. 16, two third fixing portions 243 are provided.

In some embodiments, the fixing portion 24 includes a fourth fixing portion 244, and the fourth fixing portion 244 is connected to an end of the second wall 214 located at the opening 212 of the housing 21. The fourth fixing portion 244 protrudes from the inner surface of the second wall 214 along a direction from the second wall 214 to the first wall 213. The fourth fixing portion 244 and the second wall 214 may be separately arranged and then connected into a whole. The fourth fixing portion 244 and the second wall 214 may be permanently connected, for example, connected through welding or bonding, so as to improve the stability of connection between the fourth fixing portion 244 and the second wall 214. The fourth fixing portion 244 and the second wall 214 may be detachably connected, for example, connected using bolts, which facilitates the repair and replacement of the fourth fixing portion 244. If either of the second wall 214 and the fourth fixing portion 244 is damaged, only the damaged one needs to be replaced, thereby reducing costs. In some other embodiments, the fourth fixing portion 244 and the second wall 214 may also be integrally formed. The fourth fixing portion 244 may be a flange structure provided at an end portion of the second wall 214, so that the fourth fixing portion 244 can be formed easily.

There may be one or more fourth fixing portions 244. In an embodiment where a plurality of fourth fixing portions 244 are provided, the plurality of fourth fixing portions 244 are spaced apart along the third direction Z. As shown in FIG. 2, FIG. 3, FIG. 15, and FIG. 16, two fourth fixing portions 244 are provided.

In some embodiments, the battery module 20 further includes a first insulator 25 (as shown in FIG. 2). Along the first direction X, the first insulator 25 is provided between the first wall 213 and the cell assembly 22. The first insulator 25 can insulate the first wall 213 from the cell assembly 22 and prevent the friction between the cell assembly 22 and the first wall 213, thereby increasing the service life of the housing 21. Along the first direction X, a projection of the cell assembly 22 located within a projection of the first insulator 25. In this case, even when the cell assembly 22 swells and moves a certain distance in the housing 21, the first insulator 25 is still located between the first wall 213 and the cell assembly 22.

An embodiment of this application further provides an electric device, and the electric device includes the battery module according to any one of the foregoing embodiments and/or the battery pack according to any one of the foregoing embodiments.

The battery module 20 and the battery pack 100 according to any one of the foregoing embodiments have high reliability, which helps improve the reliability of the electric device powered by the battery module 20 and the battery pack 100.

The foregoing descriptions are merely preferred some embodiments of this application which are not intended to limit this application. Persons skilled in the art understand that this application may have various modifications and variations. Any modifications, equivalent replacements, and improvements made without departing from principle of this application shall fall within the protection scope of this application.

## Claims

1. A battery module (20), comprising:
a housing (21) provided with a first wall (213) and a second wall (214) arranged opposite to each other along a first direction (X);
a cell assembly (22) accommodated in the housing (21) and supported by the first wall (213);
an elastic member (23), the cell assembly (22) and the elastic member (23) are arranged along a second direction (Y), and the first direction (X) is perpendicular to the second direction (Y); wherein
along the first direction (X), a clearance (Q1) is provided between the elastic member (23) and the second wall (214), and the elastic member (23) extends beyond the cell assembly (22).

2. The battery module (20) according to claim 1, wherein the cell assembly (22) comprises a plurality of cell units (221), the plurality of cell units (221) are stacked along the second direction (Y); and each cell unit (221) comprises a cell (2211) and a bracket (2212), the bracket (2212) comprises a first extension (22121), and the first extension (22121) covers a part of the cell (2211);
along the first direction (X), the first extension (22121) of the bracket (2212) of at least one cell unit (221) is located between the cell (2211) of the at least one cell unit (221) and the second wall (214); and
along the first direction (X), the elastic member (23) extends beyond the first extension (22121).

3. The battery module (20) according to claim 2, wherein the bracket (2212) comprises a second extension (22122), and the second extension (22122) covers a part of the cell (2211);
along the first direction (X), the second extension (22122) of the bracket (2212) of at least one cell unit (221) is located between the cell (2211) of the at least one cell unit (221) and the first wall (213).

4. The battery module (20) according to claim 3, wherein the cell (2211) comprises a cell housing (22111), an electrode assembly (22112), and electrode terminals (22113); the cell housing (22111) comprises a main body (22111a) and a first sealing portion (22111b), the electrode assembly (22112) is provided in the main body (22111a), and the electrode terminals (22113) extend out of the cell housing (22111) from the first sealing portion (22111b); wherein
the first extension (22121) covers a part of the first sealing portion (22111b); and/or
the second extension (22122) covers a part of the first sealing portion (22111b).

5. The battery module (20) according to claim 4, wherein the cell housing (22111) comprises two second sealing portions (22111c) arranged opposite to each other along the first direction (X); and along the first direction (X), the two second sealing portions (22111c) are located on two sides of the main body (22111a) respectively;
the first extension (22121) covers a part of one of the two second sealing portions (22111c) and a part of the main body (22111a); and/or
the second extension (22122) covers a part of the other of the two second sealing portions (22111c) and another part of the main body (22111a).

6. The battery module (20) according to any one of claims 3 to 5, wherein the bracket (2212) comprises a connecting portion (22123), and the connecting portion (22123) connects the first extension (22121) and the second extension (22122).

7. The battery module (20) according to any one of claims 2 to 6, wherein the bracket (2212) is integrally formed on the cell (2211).

8. The battery module (20) according to any one of claims 1 to 7, wherein the elastic member (23) comprises a base portion (231), a second connecting portion (232), and at least one buffer portion (233); the base portion (231) is connected to the cell assembly (22) and the buffer portion (233) connects the base portion (231) and the second connecting portion (232);
along the first direction (X), the second connecting portion (232) extends beyond the cell assembly (22), and/or the buffer portion (233) extends beyond the cell assembly (22).

9. The battery module (20) according to claim 8, wherein the buffer portion (233) comprises at least one first bending unit (233a), and each first bending unit (233a) comprises a first section (2331) and a second section (2332) connected to the first section (2331), an included angle between the first section (2331) and the second section (2332) is B, wherein 0° < B < 90°.

10. The battery module (20) according to claim 8 or 9, wherein the elastic member (23) is accommodated in the housing (21), and the second connecting portion (232) is fixed to the housing (21).

11. The battery module (20) according to claim 10, wherein along a third direction (Z), the elastic member (23) comprises two extensions (2322) extending beyond two ends of the base portion (231), the two extensions (2322) are fixed to the housing (21); and the first direction (X), the second direction (Y), and the third direction (Z) are perpendicular to each other.

12. The battery module (20) according to any one of claims 8 to 11, wherein the housing (21) is provided with a fixing portion (24); and along the second direction (Y), the elastic member (23) is located between the cell assembly (22) and the fixing portion (24).

13. The battery module (20) according to claim 12, wherein an opening is provided at one end of the housing (21) along the second direction (Y), and the fixing portion (24) is provided at the one end of the housing (21) having the opening.

14. A battery pack (100), comprising:
the battery module (20) according to any one of claims 1 to 13; and
a front (10) cover connected to the housing (21).

15. An electric device, comprising the battery pack (100) according to claim 14.
